(19)

**Europäisches Patentamt**
**European Patent Office**
**Office européen des brevets**

(11) **EP 4 506 848 A1**

(12) **EUROPEAN PATENT APPLICATION**
published in accordance with Art. 153(4) EPC

(43) Date of publication:
**12.02.2025 Bulletin 2025/07**

(21) Application number: **22936550.7**

(22) Date of filing: **08.04.2022**

(51) International Patent Classification (IPC):
***G06F 30/27*** *(2020.01)*

(52) Cooperative Patent Classification (CPC):
**G06F 30/27;** Y02P 90/30

(86) International application number:
**PCT/JP2022/017347**

(87) International publication number:
**WO 2023/195152 (12.10.2023 Gazette 2023/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **NEC Corporation**
**108-8001 Tokyo (JP)**
• **Tohoku University**
**Sendai-shi, Miyagi 980-8577 (JP)**

(72) Inventors:
• **KUWAMORI Naoki**
**Tokyo 108-8001 (JP)**

• **MUSA Akihiro**
**Tokyo 108-8001 (JP)**
• **SATOU Yoshihiko**
**Tokyo 136-8627 (JP)**
• **KOBAYASHI Hiroaki**
**Sendai-shi, Miyagi 980-8577 (JP)**
• **KIKUGAWA Gota**
**Sendai-shi, Miyagi 980-8577 (JP)**
• **OKABE Tomonaga**
**Sendai-shi, Miyagi 980-8577 (JP)**
• **KOMATSU Kazuhiko**
**Sendai-shi, Miyagi 980-8577 (JP)**
• **KAWAGOE Yoshiaki**
**Sendai-shi, Miyagi 980-8577 (JP)**

(74) Representative: **Betten & Resch**
**Patent- und Rechtsanwälte PartGmbB**
**Maximiliansplatz 14**
**80333 München (DE)**

(54) **RECOMMENDATION DATA GENERATION DEVICE, RECOMMENDATION DATA GENERATION METHOD, AND NON-TRANSITORY COMPUTER-READABLE MEDIUM**

(57)     A recommendation data generation apparatus (2000) acquires a plurality of pieces of material specification information (10) indicating a material specification, and acquiring, for each piece of the material specification information (10), physical property information (20) indicating a physical property value of each of a plurality of physical properties of a product (70) that can be generated with the material specification indicated by the material specification information (10). The recommendation data generation apparatus (2000) generates a self-organizing map (30) in which a physical property vector indicating a value related to the physical property value of each of a plurality of types of physical properties of the product (70) is assigned to each node on a map space by using the physical property information (20). The recommendation data generation apparatus (2000) selects at least one target node from among nodes in the self-organizing map (30) based on arrangement of the nodes corresponding to respective pieces of the physical property information (20) in the map space. The recommendation data generation apparatus (2000) generates recommendation data (80) indicating the material specification corresponding to the target node.

EP 4 506 848 A1

60                                                                                70

┌─────────────────────────────────────────────────────────────────────────┐
│  ┌──────────┐      ┌─────────────────────┐      ┌──────────┐              │
│  │ MATERIAL │ ───► │ PRODUCTION PROCESS  │ ───► │ PRODUCT  │              │
│  └──────────┘      │   OF TARGET STEP    │      └──────────┘              │
│        ┊           └─────────────────────┘            ┊                   │
│  ┌──────────────┐                              ┌──────────────┐           │
│  │   MATERIAL   │                              │   PHYSICAL   │           │
│  │SPECIFICATION │  ～10                    20～ │   PROPERTY   │           │
│  │ INFORMATION  │                              │ INFORMATION  │           │
│  └──────────────┘                              └──────────────┘           │
└─────────────────────────────────────────────────────────────────────────┘

                                                  10              20

                        ┌─────────────────────────────────────────────────┐
                        │  ┌──────────────┐      ┌──────────────┐          │
                        │  │   MATERIAL   │      │   PHYSICAL   │          │
                        │  │SPECIFICATION │------│   PROPERTY   │          │
                        │  │ INFORMATION  │      │ INFORMATION  │          │
                        │  └──────────────┘      └──────────────┘          │
                        └─────────────────────────────────────────────────┘

2000

┌───────────────────────────────────────────────────────────────────────────┐
│                                          RECOMMENDATION DATA                │
│                                          GENERATION APPARATUS               │
│  ┌─────────────────────────────────────────────────────────────────────┐  │
│  │ GENERATE SELF-ORGANIZING MAP 30 USING PHYSICAL PROPERTY VECTOR       │  │
│  │ OBTAINED FROM PHYSICAL PROPERTY INFORMATION 20                       │  │
│  └─────────────────────────────────────────────────────────────────────┘  │
│                         ┌──────────────────┐                               │
│                         │ SELF-ORGANIZING  │ ～30                          │
│                         │      MAP         │                               │
│                         └──────────────────┘                               │
│  ┌─────────────────────────────────────────────────────────────────────┐  │
│  │ DETERMINE CORRESPONDING NODE OF EACH PIECE OF PHYSICAL               │  │
│  │ PROPERTY INFORMATION 20 FROM SELF-ORGANIZING MAP 30                  │  │
│  └─────────────────────────────────────────────────────────────────────┘  │
│  ┌─────────────────────────────────────────────────────────────────────┐  │
│  │ SELECT TARGET NODE BASED ON ARRANGEMENT                              │  │
│  │ OF CORRESPONDING NODES IN MAP SPACE                                  │  │
│  └─────────────────────────────────────────────────────────────────────┘  │
│  ┌─────────────────────────────────────────────────────────────────────┐  │
│  │ GENERATE RECOMMENDATION DATA 80 INDICATING MATERIAL                  │  │
│  │ SPECIFICATION CORRESPONDING TO TARGET NODE                          │  │
│  └─────────────────────────────────────────────────────────────────────┘  │
└───────────────────────────────────────────────────────────────────────────┘

                    ┌──────────────────┐
              80～  │ RECOMMENDATION   │
                    │      DATA        │
                    └──────────────────┘

Fig. 1

## Description

### Technical Field

The present disclosure relates to a technique for providing information related to product development.

### Background Art

In product development, it is useful to ascertain a relationship between a material and a product. Therefore, a system has been developed to assist in ascertaining a relationship between a material and a product. For example, Patent Literature 1 discloses a system that assists in ascertaining a causal relationship between a tire design value and a physical property value by using a self-organizing map.

### Citation List

### Patent Literature

Patent Literature 1: Japanese Unexamined Patent Application Publication No. 2016-148988

### Summary of Invention

### Technical Problem

In Patent Literature 1, a self-organizing map is used to determine which variable is an important factor among a plurality of tire design variables. Therefore, using the self-organizing map for other purposes is not considered. The present disclosure has been made in view of such a problem, and an objective of the present disclosure is to provide a new technique for providing information useful for product development.

### Solution to Problem

A recommendation data generation apparatus according to the present disclosure includes: an acquisition means for acquiring a plurality of pieces of material specification information indicating a material specification, and acquiring physical property information indicating a physical property value of each of a plurality of physical properties of a product that can be generated with the material specification indicated by the material specification information for each piece of the material specification information; a first generation means for generating a self-organizing map in which a physical property vector indicating a value related to the physical property value of each of a plurality of types of physical properties of the product is assigned to each node on a map space by using the physical property information; a selection means for selecting at least one target node from among nodes in the self-organizing map based on arrangement of the nodes corresponding to respective pieces of the physical property information in the map space; and a second generation means for generating recommendation data indicating the material specification corresponding to the target node.

A recommendation data generation method according to the present disclosure is performed by a computer. The recommendation data generation method includes: an acquisition step of acquiring a plurality of pieces of material specification information indicating a material specification, and acquiring physical property information indicating a physical property value of each of a plurality of physical properties of a product that can be generated with the material specification indicated by the material specification information for each piece of the material specification information; a first generation step of generating a self-organizing map in which a physical property vector indicating a value related to the physical property value of each of a plurality of types of physical properties of the product is assigned to each node on a map space by using the physical property information; a selection step of selecting at least one target node from among nodes in the self-organizing map based on arrangement of the nodes corresponding to respective pieces of the physical property information in the map space; and a second generation step of generating recommendation data indicating the material specifications corresponding to the target node.

A non-transitory computer-readable medium according to the present disclosure stores a program for causing a computer to execute the recommendation data generation method according to the present disclosure.

### Advantageous Effects of Invention

According to the present disclosure, a new technique for providing information useful for product development is provided.

**Brief Description of Drawings**

Fig. 1 is a diagram illustrating an overview of an operation of a recommendation data generation apparatus according to a first example embodiment.

Fig. 2 is a block diagram illustrating a functional configuration of the recommendation data generation apparatus according to the first example embodiment.

Fig. 3 is a block diagram illustrating a hardware configuration of a computer that realizes the recommendation data generation apparatus according to the first example embodiment.

Fig. 4 is a flowchart illustrating a flow of processes executed by the recommendation data generation apparatus according to the first example embodiment.

Fig. 5 is a diagram illustrating material specification information in a table format.

Fig. 6 is a diagram illustrating physical property information in a table format.

Fig. 7 is a diagram illustrating a structure of a self-organizing map in a table format.

Fig. 8A is a flowchart illustrating a flow of processes of selecting a target node.

Fig. 8B is a flowchart illustrating a flow of processes of selecting a target node.

Fig. 9 is a diagram illustrating a map space divided into a plurality of partial regions.

Fig. 10 is a diagram illustrating a structure of the self-organizing map in which a specification vector is assigned to each node in a table format.

Fig. 11 is a diagram illustrating a map image.

Fig. 12 is a diagram illustrating an overview of an operation of a recommendation data generation apparatus according to a second example embodiment.

Fig. 13 is a block diagram illustrating a functional configuration of the recommendation data generation apparatus according to the second example embodiment.

Fig. 14 is a flowchart illustrating a flow of processes executed by the recommendation data generation apparatus according to the second example embodiment.

**Example Embodiment**

Hereinafter, example embodiments of the present disclosure will be described in detail with reference to the drawings. In the drawings, the same or corresponding elements are denoted by the same reference numerals, and redundant description will be omitted as necessary for clarity of explanation. In addition, unless otherwise described, predetermined information such as predetermined values and threshold values are stored in advance in a storage device or the like accessible from an apparatus using the information. Furthermore, unless otherwise described, a storage unit includes one or more storage devices in any number.

[First Example Embodiment]

<Overview>

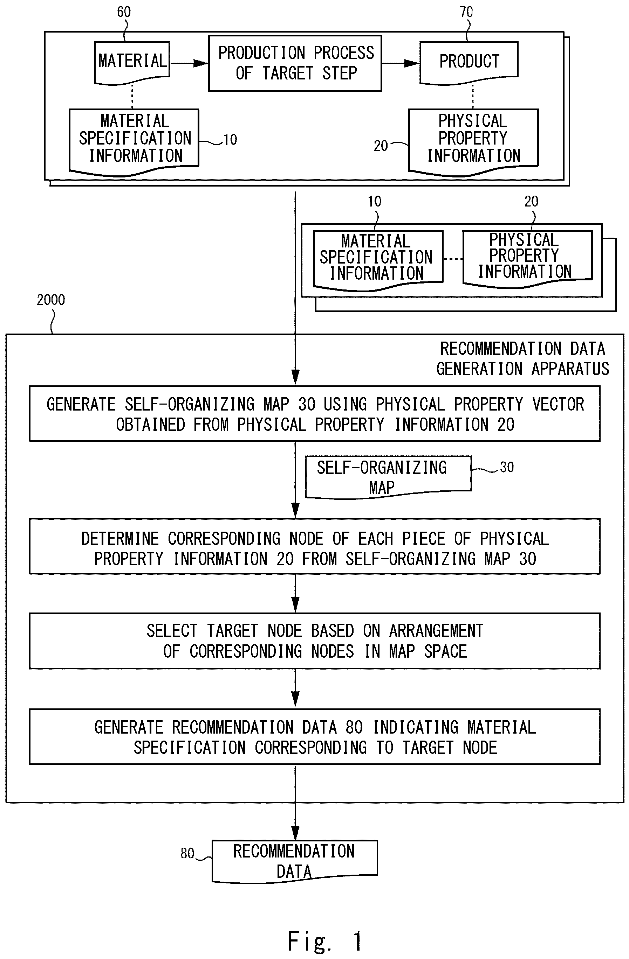

Fig. 1 is a diagram illustrating an overview of an operation of a recommendation data generation apparatus 2000 according to a first example embodiment. Here, Fig. 1 is a diagram for facilitating understanding of the overview of the recommendation data generation apparatus 2000, and the operation of the recommendation data generation apparatus 2000 is not limited to that illustrated in Fig. 1.

The recommendation data generation apparatus 2000 generates a self-organizing map 30 indicating a distribution of physical properties of various products 70 that can be generated in a specific step (hereinafter, a target step) of product development. The product 70 is predicted to be produced or is actually produced by processing a material 60 in a production process of the target step. The material 60 is a material used for generating the product 70. Materials 60 of various patterns may be used in the target step. The physical properties of the product 70 may vary depending on the material 60 to be used.

A pattern of the material 60 is identified by a material specification. In other words, the materials 60 having different material specifications are treated as the materials 60 of different patterns. On the other hand, the materials 60 having the same material specification are treated as the materials 60 of the same pattern.

The material specification is represented by, for example, the type of material, the types of substances constituting the material, the blending ratio between the substances, the type of processing performed to create the material, and the like. Examples of the type of material include carbon fiber reinforced plastic and stainless steel. For example, it is assumed that the material 60 is carbon fiber reinforced plastic. In this case, the material specification of the material 60 include the type (polyacrylonitrile fiber, cellulose carbide fiber, or the like) of each of one or more carbon fibers constituting the material 60, the type (epoxy, polyether terephthalate, or the like) of each of one or more resins constituting the material 60, and the blending ratio of these substances. In addition, the material specification may further include the type of fiber directional polymerization method, the type of pressure bonding method, the resin composition, and the like.

Note that the target step may be a single step or a combination of a plurality of consecutive steps. In the latter case, the product 70 is a product that can be generated by processing the material 60 in the plurality of consecutive steps. For example, it is assumed that the target step is a combination of a step P1 and a step P2. In this case, the product 70 is obtained by processing the material 60 in a production process as the step P1 and then processing the product obtained from the step P1 in a production process as the step P2.

The self-organizing map 30 has a plurality of nodes arranged on an m-dimensional map space. Here, m is set to 2 or 3 so that the map space can be visually expressed (for example, in an image). In the visually expressed map space, each node is represented by, for example, a square of a grid or a vertex of a lattice.

Multi-dimensional data representing the magnitude of a physical property value of each of a plurality of types of physical properties (hereinafter, a physical property vector) is assigned to each node of the self-organizing map 30. For example, it is assumed that four types of physical properties such as flame retardancy, heat resistance, elastic modulus, and toughness are used. In this case, the physical property vector is four-dimensional data representing the magnitude of a physical property value of each of these four types of physical properties. Hereinafter, the number of dimensions of the physical property vector is set to n. Here, $n > m$. That is, in the self-organizing map 30, a space of physical property vector is a high-dimensional space, and the map space is a low-dimensional space.

In order to generate such a self-organizing map 30, for each of the plurality of patterns of the material 60 (in other words, the material 60 identified by each of the plurality of patterns of the material specification), the recommendation data generation apparatus 2000 acquires the material specification information 10 indicating the material specification of that material 60 and physical property information 20 corresponding to that material specification information 10. That is, the recommendation data generation apparatus 2000 acquires a plurality of pairs of the material specification information 10 and the physical property information 20. The physical property information 20 corresponding to the material specification information 10 indicates the physical property value for each of the plurality of types of physical properties for the product 70 that can be generated in the target step by using the material 60 of the material specification represented by the material specification information 10. The type of physical property is, for example, flame retardancy, heat resistance, elastic modulus, toughness, or the like as described above. Note that the number of types of physical properties indicated by the physical property information 20 is equal to or larger than the number n of dimensions of the physical property vector.

The recommendation data generation apparatus 2000 determines a node (hereinafter, a corresponding node) corresponding to each piece of the physical property information 20 in the self-organizing map 30. Here, the corresponding node of the physical property information 20 is a node associated with a physical property vector that is most similar to the physical property vector obtained from that physical property information 20 among the nodes of the self-organizing map 30. That is, the corresponding node of the physical property information 20 is a node representing a physical property closest to the physical property indicated by that physical property information 20 among the nodes of the self-organizing map 30.

Based on the arrangement of corresponding nodes of the respective pieces of physical property information 20 in the map space, the recommendation data generation apparatus 2000 selects at least one node as a target node from the nodes that correspond to neither piece of the physical property information 20 (in other words, among nodes that are not the corresponding nodes). For example, in the map space, a node positioned away from the corresponding nodes is selected as the target node.

The recommendation data generation apparatus 2000 estimates the material specification corresponding to the target node using the self-organizing map 30. Then, the recommendation data generation apparatus 2000 generates recommendation data 80 indicating the estimated material specification.

<Example of Advantageous Effect>

The pair of the material specification information 10 and the physical property information 20 acquired by the recommendation data generation apparatus 2000 is generated based on a result of the simulation of the generation of the product 70 or the experimental generation of the product 70 that has already been performed. Therefore, it can be said that the pair of the material specification information 10 and the physical property information 20 is knowledge about the relationship between the material specification and the physical properties obtained by simulations or the like that has been carried out.

When further simulations or the like are performed to increase knowledge, it is useful to efficiently increase the knowledge by appropriately selecting the material specification to be used in the simulations or the like. Here, as one method for efficiently increasing knowledge, simulations or the like may be carried out in such a manner as to obtain products 70 having physical properties as different as possible from the products 70 obtained so far. In this way, it is possible to obtain knowledge about the relationship with the material specification for various physical properties whose degrees of similarity among each other are not high. In other words, it is possible to avoid obtaining knowledge only for similar physical properties.

In this regard, according to the recommendation data generation apparatus 2000, a node (corresponding node) of the self-organizing map 30 corresponding to each piece of the physical property information 20 is determined, and one or more target nodes are selected based on the arrangement of corresponding nodes in the map space of the self-organizing map 30. Here, the arrangement of corresponding nodes in the map space indicates a distribution on the map space of physical properties about which knowledge has already been obtained. Therefore, by selecting a target node based on the arrangement of corresponding nodes in the map space, it is possible to select, as the target node, a node representing a physical property whose degree of similarity to the physical properties about which knowledge has already been obtained is not high.

Then, according to the recommendation data generation apparatus 2000, the material specification corresponding to the target node is estimated, and recommendation data 80 indicating the material specification is generated. Here, the material specification corresponding to the target node is the material specification estimated to obtain a product 70 having physical properties corresponding to the target node. Therefore, by performing a simulation or the like using that material specification, there is a high probability that a product 70 having physical properties that are not highly similar to the physical properties about which knowledge has already been obtained. As a result, according to the recommendation data generation apparatus 2000, it is possible to easily obtain the material specification capable of efficiently performing a simulation or the like of generating a product 70.

Hereinafter, the recommendation data generation apparatus 2000 according to the present example embodiment will be described in more detail.

<Example of Functional Configuration>

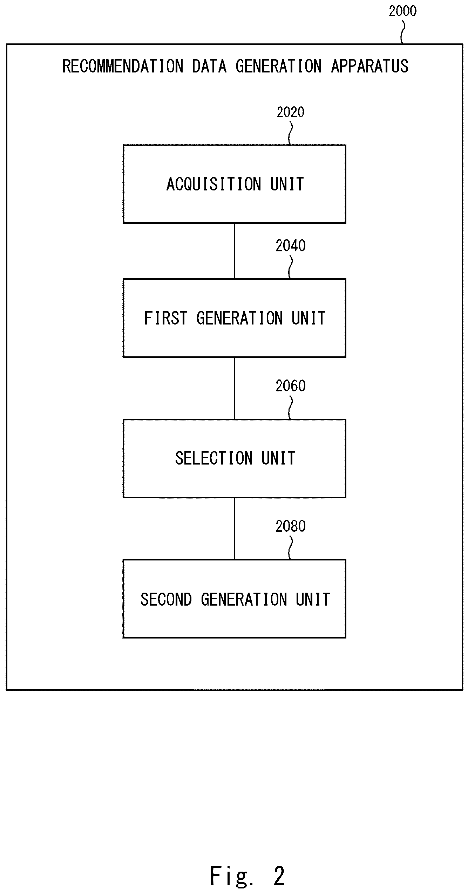

Fig. 2 is a block diagram illustrating a functional configuration of the recommendation data generation apparatus 2000 according to the first example embodiment. The recommendation data generation apparatus 2000 includes an acquisition unit 2020, a first generation unit 2040, a selection unit 2060, and a second generation unit 2080. The acquisition unit 2020 acquires material specification information 10 and physical property information 20 for each of a plurality of patterns of the material 60. The first generation unit 2040 generates a self-organizing map 30 using a physical property vector obtained from each piece of the physical property information 20. The selection unit 2060 determines a corresponding node for each piece of the physical property information 20. The selection unit 2060 selects at least one node that is not any of the corresponding nodes as a target node based on the arrangement of the corresponding nodes in a map space. The second generation unit 2080 generates recommendation data 80 indicating the material specification corresponding to the target node.

<Example of Hardware Configuration>

Each functional component of the recommendation data generation apparatus 2000 may be implemented by hardware (e.g., a hard-wired electronic circuit or the like) that implements each functional component, or may be implemented by a combination of hardware and software (e.g., a combination of an electronic circuit and a program that controls the electronic circuit or the like). Hereinafter, a case where each functional component of the recommendation data generation apparatus 2000 is implemented by a combination of hardware and software will be further described.

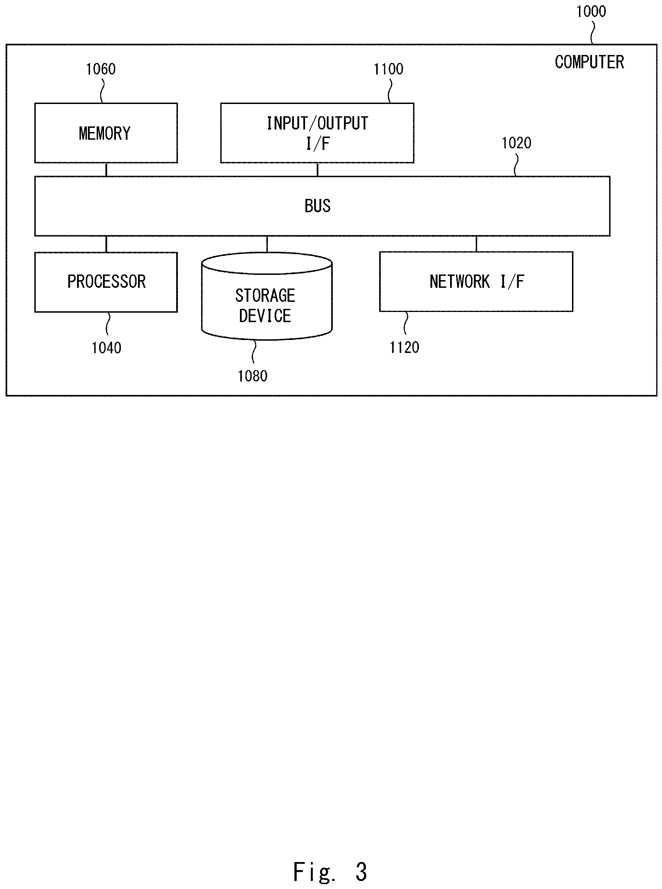

Fig. 3 is a block diagram illustrating a hardware configuration of a computer 1000 that implements the recommendation data generation apparatus 2000 according to the first example embodiment. The computer 1000 is any computer. For example, the computer 1000 is a stationary computer such as a personal computer (PC) or a server machine. In another example, the computer 1000 is a portable computer such as a smartphone or a tablet terminal. The computer 1000 may be a special-purpose computer designed to implement the recommendation data generation apparatus 2000, or may be a general-purpose computer.

For example, each function of the recommendation data generation apparatus 2000 is implemented in the computer 1000 by installing a predetermined application in the computer 1000. The above-described application is configured with a program for implementing each functional component of the recommendation data generation apparatus 2000. Note that the program is acquired in any method. For example, the program can be acquired from a storage medium (a DVD disk, a USB memory, or the like) in which the program is stored. In another example, the program can be acquired by downloading the program from a server machine that manages a storage device in which the program is stored.

The computer 1000 includes a bus 1020, a processor 1040, a memory 1060, a storage device 1080, an input/output interface 1100, and a network interface 1120. The bus 1020 is a data transmission path for the processor 1040, the memory 1060, the storage device 1080, the input/output interface 1100, and the network interface 1120 to transmit and receive data to and from each other. However, the method of connecting the processor 1040 and the like to each other is not limited to the bus connection.

The processor 1040 is any of various processors such as a central processing unit (CPU), a graphics processing unit (GPU), or a field-programmable gate array (FPGA). The memory 1060 is a primary storage device realized by using a random access memory (RAM) or the like. The storage device 1080 is an auxiliary storage device realized using a hard disk, a solid state drive (SSD), a memory card, a read only memory (ROM), or the like.

The input/output interface 1100 is an interface connecting the computer 1000 with an input/output device. For example, an input device such as a keyboard and an output device such as a display device are connected to the input/output interface 1100.

The network interface 1120 is an interface connecting the computer 1000 to a network. The network may be a local area network (LAN) or a wide area network (WAN).

The storage device 1080 stores a program (a program for realizing the above-described application) for implementing each functional component of the recommendation data generation apparatus 2000. The processor 1040 realizes each functional component of the recommendation data generation apparatus 2000 by reading the program into the memory 1060 and executing the program.

The recommendation data generation apparatus 2000 may be implemented by a single computer 1000, or may be implemented by a plurality of computers 1000. In the latter case, the configurations of the computers 1000 do not need to be the same, and can be different from each other.

<Flow of Processing>

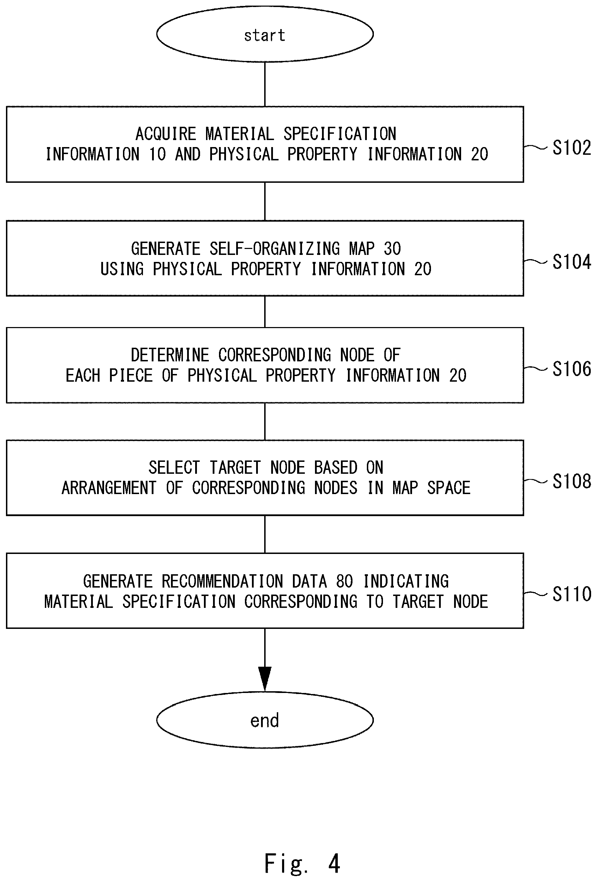

Fig. 4 is a flowchart illustrating a flow of processing executed by the recommendation data generation apparatus 2000 according to the first example embodiment. The acquisition unit 2020 acquires material specification information 10 and physical property information 20 for each of the plurality of patterns of the material 60 (S102). The first generation unit 2040 generates a self-organizing map 30 using a physical property vector obtained from each piece of the physical property information 20 (S104). The selection unit 2060 determines a corresponding node for each piece of the physical property information 20 (S106). The selection unit 2060 selects a target node based on the arrangement of corresponding nodes in a map space (S108). The second generation unit 2080 generates recommendation data 80 the indicates the material specification corresponding to the target node (S110).

<Acquisition of Material Specification Information 10 and Physical Property Information 20: S102>

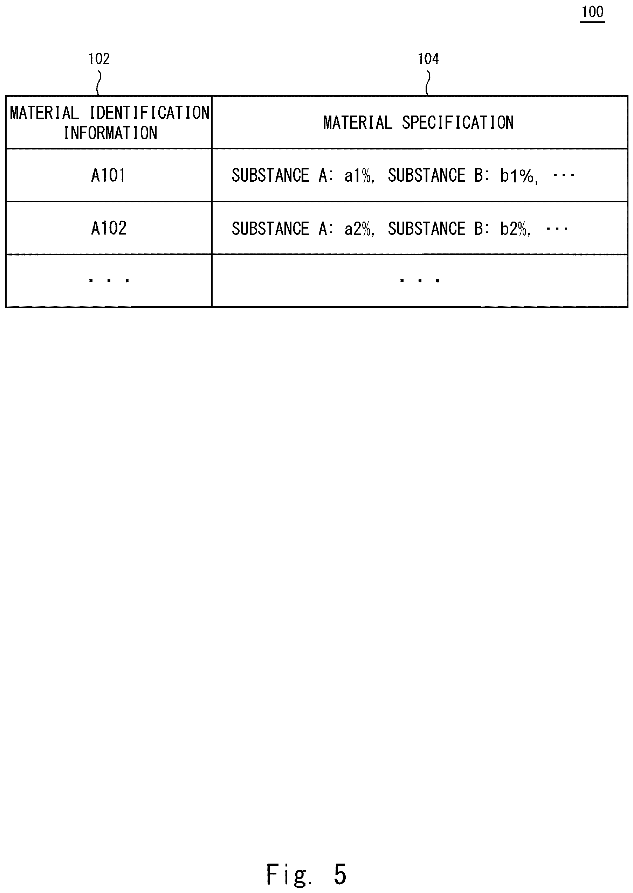

For each of the plurality of patterns of the material 60, the acquisition unit 2020 acquires the material specification information 10 that indicates the material specification of that material 60 and the physical property information 20 of a product 70 that can be generated by using that material 60 (S102). Fig. 5 is a diagram illustrating the material specification information 10 in a table format. The table 100 of Fig. 5 has columns for material identification information 102 and material specification 104. The material identification information 102 indicates identification information assigned to a material 60. The material specification 104 indicates the specification of the material 60.

In Fig. 5, the material specification information 10 is represented by a record of the table 100. That is, the material specification information 10 associates the identification information of the material 60 with the material specification of the material 60 having that identification information.

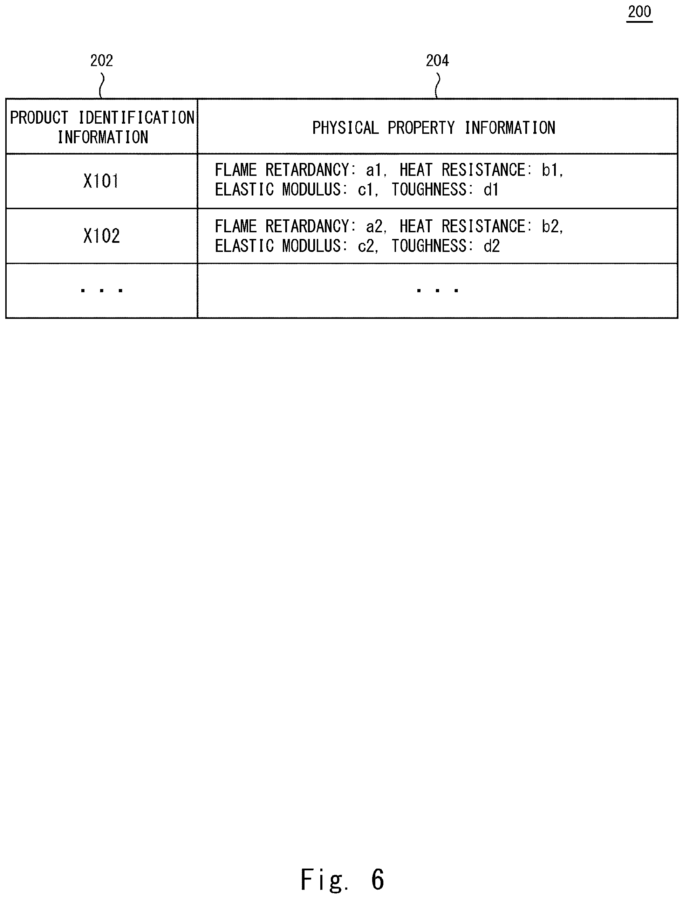

Fig. 6 is a diagram illustrating the physical property information 20 in a table format. The table 200 of Fig. 6 has columns for product identification information 202 and physical properties 204. The product identification information 202 indicates identification information of a product 70. The physical properties 204 indicate physical properties of the product 70. In the table 200, the physical properties of the product 70 are represented by indicating an association of "a label representing the type of physical property: a physical property value of the physical property" for each of the physical properties.

In Fig. 6, the physical property information 20 is represented by a record of the table 200. That is, the physical property information 20 associates the identification information of the product 70 with the physical properties of the product 70 having that identification information.

The acquisition unit 2020 acquires a plurality of pairs of material specification information 10 and physical property information 20. The acquisition unit 2020 acquires a pair of material specification information 10 and physical property information 20 in various methods. For example, a pair of material specification information 10 and physical property information 20 is stored in advance in any storage unit accessible from the recommendation data generation apparatus 2000. The acquisition unit 2020 acquires a pair of material specification information 10 and physical property information 20 by accessing the storage unit. In another example, the acquisition unit 2020 may acquire a pair of material specification information 10 and physical property information 20 by receiving a user input for inputting a pair of material specification information 10 and physical property information 20. In another example, the acquisition unit 2020 may acquire a pair of material specification information 10 and physical property information 20 by receiving a pair of material specification information 10 and physical property information 20 transmitted from another apparatus.

Here, a pair of material specification information 10 and physical property information 20 is generated in various methods. For example, a pair of material specification information 10 and physical property information 20 is generated by simulating the generation of the product 70. Specifically, physical property information 20 indicating a predicted value of the physical property value for each of the physical properties is generated for the product 70 by performing a simulation with specific material specification as an input. Then, a pair of the generated physical property information 20 and the material specification information 10 indicating the material specifications given as the input is obtained. Here, a well-known technique can be used as a technique for acquiring the material specification as an input, and achieving a simulation, for the material determined by the material specification, to output prediction data of physical properties of a product generated in a specific step by using the material.

In another example, a pair of material specification information 10 and physical property information 20 may be generated by actually generating a product 70. Specifically, a product 70 is experimentally generated by using the material 60 represented by a specific material specification in the target step. Furthermore, physical property information 20 is generated by measuring the physical property value of each physical property for the generated product 70. As a result, a pair of the generated physical property information 20 and the material specification information 10 indicating the used material 60 is obtained.

Note that the physical property information 20 acquired by the acquisition unit 2020 may include data with different data representation methods. For example, it is considered that different labels are used for the physical properties that are essentially equal to each other. In addition, it is considered that the physical property values of the same physical properties are represented by units different from each other. In such a case, the acquisition unit 2020 preferably unifies the data representation methods by unifying labels, performing unit conversion, and the like. It is considered that the situation in which the data representation methods are different among pieces of the physical property information 20 may occur, for example, when both the physical property information 20 generated by using the simulation and the physical property information 20 generated by actually generating the product 70 are acquired. Note that it is preferable that such the unification of the data representation methods is performed for the material specification information 10.

<Generation of Self-Organizing Map 30: S104>

The first generation unit 2040 generates a self-organizing map 30 by using each piece of physical property information 20 (S104). The self-organizing map 30 has a plurality of nodes arranged on an m-dimensional map space (m=2 or m=3). Whether to adopt a two-dimensional map space or a three-dimensional map space may be determined in advance, or may be designated by the user. An n-dimensional physical property vector is assigned to each node of the self-organizing map 30.

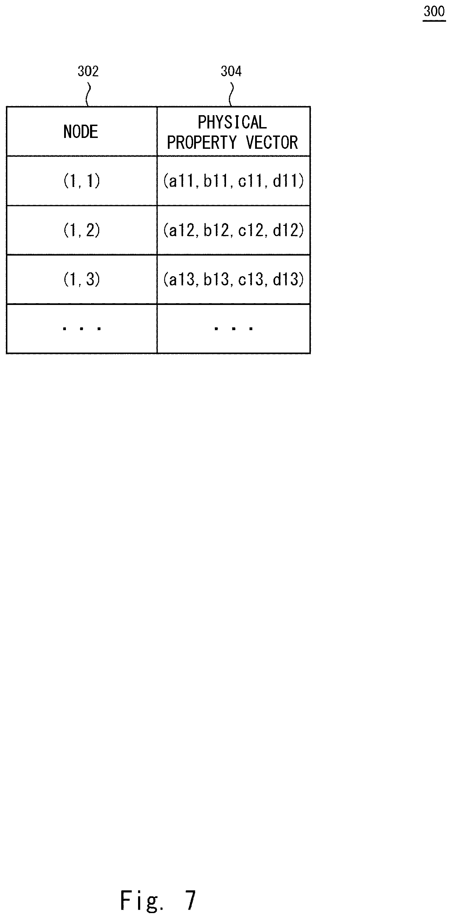

Fig. 7 is a diagram illustrating a structure of the self-organizing map 30 in a table format. The table 300 has two columns for node 302 and physical property vector 304. Each record of the table 300 indicates that a physical property vector indicated by the physical property vector 304 in the record is assigned to the node specified by the node 302 in the record. Note that, in Fig. 7, the node 302 indicates a coordinate of a node on the map space.

The assignment of the physical property vector to each node is performed by training the self-organizing map 30. The training of the self-organizing map 30 can be performed by inputting n-dimensional training data to be used for training to the self-organizing map 30. Here, as a concrete method of training the self-organizing map by using training data, a well-known method can be used.

For example, the first generation unit 2040 initializes the self-organizing map 30 by a certain method. As an initialization method, for example, a method of initializing a physical property vector of each node to a random value can be adopted. The first generation unit 2040 obtains a plurality of physical property vectors by obtaining a physical property vector from each of a plurality of pieces of physical property information 20. The first generation unit 2040 generates a self-organizing map 30 by training the self-organizing map 30 with each of the plurality of physical property vectors treated as training data. As a result, the physical property vector corresponding to each node of the self-organizing map 30 is n-dimensional data indicating a value related to each of the physical property values of n types of physical properties.

<Determination of Corresponding Node: S106>

The selection unit 2060 determines a corresponding node of each piece of the physical property information 20 (S106). The corresponding node of the physical property information 20 is a node having a physical property vector most similar to the physical property vector obtained from that physical property information 20 among the nodes of the self-organizing map 30.

The degree of similarity between the physical property vectors can be determined, for example, based on a distance between the physical property vectors. Therefore, for example, the selection unit 2060 performs the following processes on each piece of the physical property information 20. First, the selection unit 2060 calculates a distance of a physical property vector of each node of the self-organizing map 30 to the physical property vector obtained from the physical property information 20. Then, the selection unit 2060 determines a node having the smallest calculated distance as a node having a physical property vector most similar to the physical property vector obtained from the physical property information 20. Therefore, the node determined here is determined as a corresponding node of the physical property information 20.

<Selection of Target Node: S108>

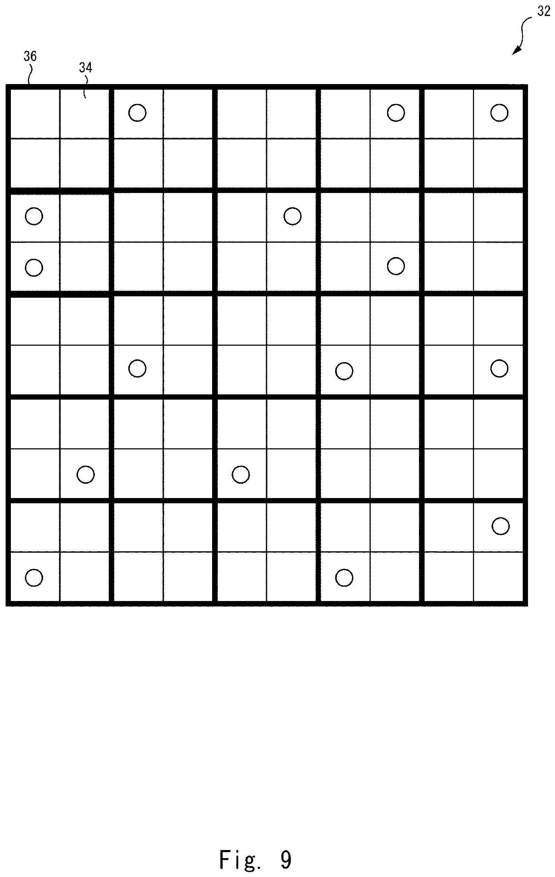

The selection unit 2060 selects a target node from among nodes other than the corresponding nodes based on the arrangement of the corresponding nodes in the map space (S108). Conceptually, the selection unit 2060 selects a node positioned away from the corresponding nodes in the map space as the target node. Hereinafter, a method of selecting the target node will be specifically exemplified.

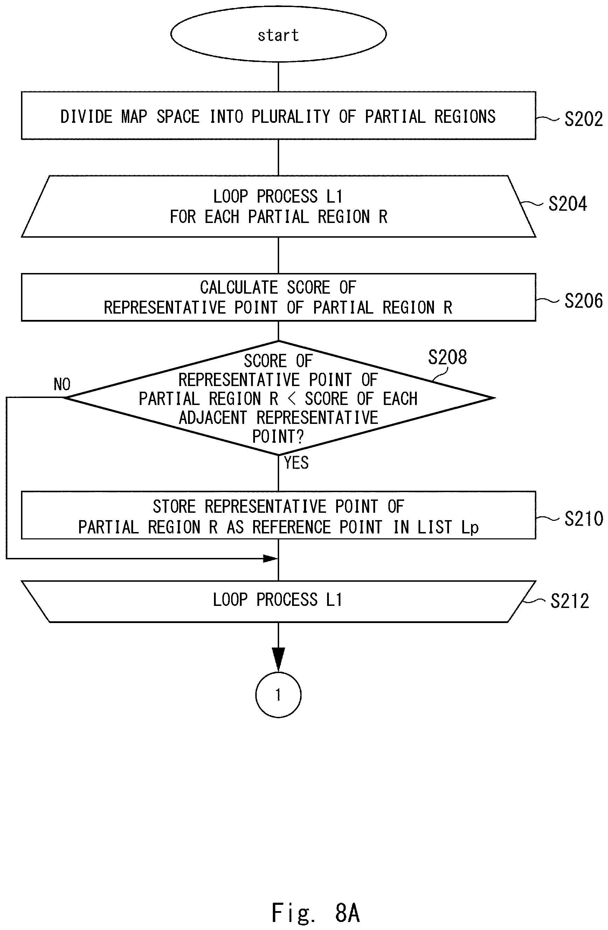

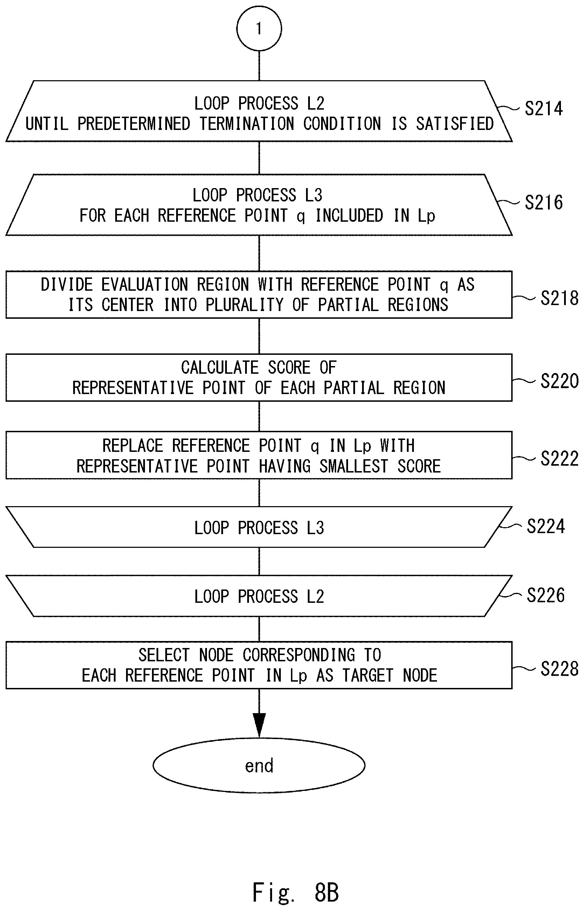

Figs. 8A and 8B are flowcharts illustrating a flow of processes of selecting a target node. Hereinafter, Figs. 8A and 8B will also be collectively referred to as Fig. 8.
The selection unit 2060 divides the map space into a plurality of partial regions (S202). Each of the partial regions includes a predetermined number of nodes. Fig. 9 is a diagram illustrating a map space 32 divided into a plurality of partial regions. In the map space 32 of Fig. 9, each partial region 36 is a rectangular region surrounded by a thick frame, and has four nodes 34 therein. A node 34 with a circle is a corresponding node.
S204 to S212 constitute a loop process L1 executed for each of the plurality of partial regions. In S204, the selection unit 2060 determines whether the loop process L1 has been executed for all the partial regions. When the loop process L1 has already been executed for all the partial regions, the processing of Fig. 8 proceeds to S214. On the other hand, when there are partial regions that have not yet been subjected to the loop process L1, the selection unit 2060 selects one of them. Here, the selected partial region will be referred to as a "partial region R". Thereafter, the processing of Fig. 8 proceeds to S206.
For a representative point of the partial region R, the selection unit 2060 calculates an evaluation score based on a positional relationship between the representative point and each corresponding node (S206). The representative point of the partial region R is, for example, any vertex of the partial region R, the center of the partial region R, or the like.
The evaluation score of the representative point is defined by, for example, the following Equation (1).
[Equation 1]

$$s[i][j] = \sum_{k=1}^{n} \frac{1}{d_k[i][j]} \qquad (1)$$

Here, S[i][j] represents an evaluation score of a representative point P(i,j) of a partial region R positioned i-th from the top and j-th from the left. d_k[i][j] represents a distance between the representative point P(i,j) and a k-th corresponding node. Note that the underscores represent subscripts. n represents the total number of corresponding nodes. In the example of Fig. 9, n=15, indicating that there are 15 corresponding nodes.
According to Equation (1), a representative point located at a lower-density position in distribution of corresponding nodes in the map space has a smaller evaluation score.
Here, in a case where the representative point is located at the center of a certain node, a coordinate of the representative point is represented by the coordinate of the node. On the other hand, in a case where the representative point is not located at the center of the node, for example, a coordinate of the representative point is determined based on the coordinates of the nodes adjacent to the representative point. For example, in the example of Fig. 9, it is assumed that a representative point of a partial region is a vertex of the partial region. In this case, a coordinate of the representative point is calculated as, for example, a coordinate of the center of the four nodes (an upper left node, an upper right node, a lower right node, and a lower left node of the representative point) each of which has the representative point as a vertex.
The distance between the representative point and the corresponding node may be represented by a distance in the map space, or may be represented by a distance in a high-dimensional space (a space of physical property vector) of the self-organizing map 30. In the latter case, the distance between the representative point and the corresponding node is represented by a distance between the physical property vectors corresponding to these two points.
The definition of the evaluation score of the representative point is not limited to the definition by Equation (1). For example, the evaluation score of the representative point may be defined by the following Equation (2).
[Equation 2]

$$s[i][j] = \frac{1}{\min_{1 \le k \le n} d_k[i][j]} \qquad (2)$$

According to Equation (2), a representative point farther from the closest corresponding node has a smaller evaluation score.

The selection unit 2060 determines whether the evaluation score of the representative point of the partial region R is lower than the evaluation score of any other representative point adjacent to the representative point of the partial region R (S208). When the evaluation score of the representative point of the partial region R is lower than the evaluation score of any other representative point adjacent to the representative point of the partial region R (S208: YES), the selection unit 2060 selects the representative point of the partial region R as a reference point to be used in a subsequent evaluation, and stores the representative point of the partial region R in a reference point list Lp (S210).

On the other hand, when there is a representative point of which an evaluation score is equal to or lower than the evaluation score of the representative point of the partial region R among the other representative points adjacent to the representative point of the partial region R (S208: NO), the processing of Fig. 8 proceeds to S212. In this case, the representative point of the partial region R is not selected as a reference point.

For example, in the example of Fig. 9, each representative point has eight adjacent representative points. Then, a representative point having an evaluation score smaller than the evaluation score of any of the eight adjacent representative points is selected as the reference point.

Step S212 is a termination of the loop process L1. Therefore, the process of Fig. 8 proceeds to S204.

When the loop process L1 is terminated, S214 is executed. S214 to S226 constitute a loop process L2 that is repeatedly executed until a predetermined termination condition is satisfied. For example, the predetermined termination condition is that the loop process L2 is executed a predetermined number of times. In another example, the predetermined termination condition is that a size of an evaluation region to be described below is equal to or smaller than a predetermined threshold value. Note that the predetermined number of times and the predetermined threshold value for defining the termination condition are set in advance, for example, by the user of the recommendation data generation apparatus 2000.

S216 to S224 constitute a loop process L3 executed for each reference point included in the list Lp. In S216, the selection unit 2060 determines whether the loop process L3 has been executed for all the reference points included in Lp. When the loop process L3 has already been executed for all the reference points, the processing of Fig. 8 proceeds to S226. Since S226 is a termination of the loop process L2, the processing of Fig. 8 proceeds to S214.

On the other hand, when there are reference points that have not yet been subjected to the loop process L3, the selection unit 2060 selects one of them. The reference point selected here will be referred to as a reference point q. Thereafter, the processing of Fig. 8 proceeds to S218.

The selection unit 2060 determines an evaluation region that is a region on the map space with the reference point q as its center, and divides the determined evaluation region into a plurality of partial regions (S218). Here, when S218 at the current time is included in the first iteration of the repeatedly executed loop process L2, for example, a size of an evaluation region is calculated by multiplying the size of the map space by a predetermined ratio $\alpha$ of less than 1. On the other hand, when S218 at the current time is included in the second or subsequent iteration of the repeatedly executed loop process L2, for example, the size of the evaluation region is calculated by multiplying a size of a previous evaluation region by a ratio $\alpha$ of less than 1. By doing so, the size of the evaluation region decreases every time the number of times the loop process L2 is executed increases.

The ratio $\alpha$ is determined in any method. For example, the ratio $\alpha$ is fixedly set by an administrator or the like of the recommendation data generation apparatus 2000. In another example, the ratio $\alpha$ may be designated by the user of the recommendation data generation apparatus 2000. Here, as a value of the ratio $\alpha$ in the repeatedly executed loop process L2, the same value may be used every time, or a different value may be used every time. In the latter case, for example, the value of the ratio $\alpha$ is individually set for each of the first and subsequent iterations of the repeatedly executed loop process L2.

The selection unit 2060 calculates an evaluation score as described above for the representative point of each partial region obtained from the evaluation region (S220). The selection unit 2060 replaces the reference point q stored in the list Lp with the representative point having the smallest evaluation score calculated in S220 (S222).

According to the processing of S222, the reference point q included in Lp is replaced with a point included in the evaluation region around the reference point q with a smaller evaluation score. Here, as described above, the size of the evaluation region decreases as the number of times the loop processing L2 is executed increases. Therefore, by repeatedly executing the loop process L2, the position of each reference point is repeatedly corrected while gradually narrowing the correction range.

Step S224 is a termination of the loop process L3. Therefore, the processing of Fig. 8 proceeds to S216.

After the loop process L3 is completed, the selection unit 2060 selects a node corresponding to each reference point in the list Lp as a target node. The node corresponding to the reference point is, for example, a node including the reference point in its region in a case where the map space is divided into a plurality of nodes as illustrated in Fig. 9. In another example, the node corresponding to the reference point is a node having a coordinate closest to the coordinate of the reference point.

According to the method illustrated in Fig. 8, a node having a small evaluation score as described above is searched for on the map space by so-called grid search. Here, in a case where an evaluation score defined by Equation (1) is used, a node located at a low-density position in a distribution of corresponding nodes in the map space is selected as the target node. On the other hand, in a case where an evaluation score defined by Equation (2) is used, a node far from the closest corresponding node is selected as the target node.

Here, the method of selecting the target node is not limited to the method illustrated in Fig. 8. For example, the selection unit 2060 may select a node corresponding to each reference point included in the list Lp obtained in the loop process L1 as the target node, without performing the loop process L2 and the loop process L3 in Fig. 8B. In another example, the selection unit 2060 may calculate an evaluation score for each node other than the corresponding nodes, and select a node having the smallest evaluation score or a predetermined number of nodes from the first one in ascending order of evaluation score as the target node.

<Generation of Recommendation Data 80: S110>

The second generation unit 2080 estimates the material specification corresponding to the target node, and generates recommendation data 80 indicating the estimated material specification (S110). To this end, using the material specification information 10, the second generation unit 2080 assigns, to each node of the self-organizing map 30, multi-dimensional data (hereinafter, a specification vector) indicating a value for each of a plurality of types of parameters (hereinafter, specification parameters) of the material specification. For example, the specification vector is data in which information indicated by the material specification 104 of Fig. 5 is represented as a vector. Then, the second generation unit 2080 estimates the specification vector assigned to the target node as the material specification corresponding to the target node.

Hereinafter, a method of assigning a specification vector to each node will be described.

First, the second generation unit 2080 assigns a specification vector obtained from each piece of material specification information 10 to a node corresponding to the material specification information 10. Here, the node corresponding to the material specification information 10 is the corresponding node of the physical property information 20 that corresponds to that material specification information 10.

The specification vector obtained from the material specification information 10 may indicate values for all of the specification parameters indicated by the material specification information 10, or may indicate values for some of the specification parameters indicated by the material specification information 10. That is, when the number of dimensions of the specification vector is $k$, the value of $k$ may be the same as the number of the specification parameters indicated by the material specification information 10, or may be smaller than the number of the specification parameters indicated by the material specification information 10.

For example, it is assumed that the material specification information 10 indicates both a parameter that takes a continuous value (e.g., a blending ratio of substances) and a parameter that does not take continuous values (e.g., the type of process, and the like). In this case, for example, the specification vector is generated by a parameter that takes continuous values.

Among the parameters indicated by the material specification information 10, which parameter is used to generate a specification vector may be determined in advance or designated by the user. In addition, the specification vector may indicate a value of a parameter indicated by the material specification information 10 as it is, or may indicate a value obtained by converting (for example, normalizing or standardizing) the value of each parameter by a predetermined method.

Furthermore, the second generation unit 2080 obtains, by estimation, a specification vector to be assigned to a node that is not associated with the material specification information 10. Specifically, the second generation unit 2080 estimates a distribution of specification vectors in the map space based on specification vectors of nodes associated with the material specification information 10 and the arrangement of the nodes in the map space. Then, the second generation unit 2080 also assigns a specification vector to a node with which the material specification information 10 is not associated using the estimated distribution.

The distribution of specification vectors in the map space is estimated in various methods. For example, the second generation unit 2080 estimates a distribution of specification vectors in the map space, from the specification vectors of the nodes associated with the material specification information 10 and the arrangement of the nodes in the map space, by any interpolation processing such as linear interpolation or spline interpolation. In another example, the second generation unit 2080 may estimate a distribution of specification vectors in the map space by sparse estimation. When the distribution of specification vectors is estimated, Bayesian estimation may be further applied to improve estimation accuracy.

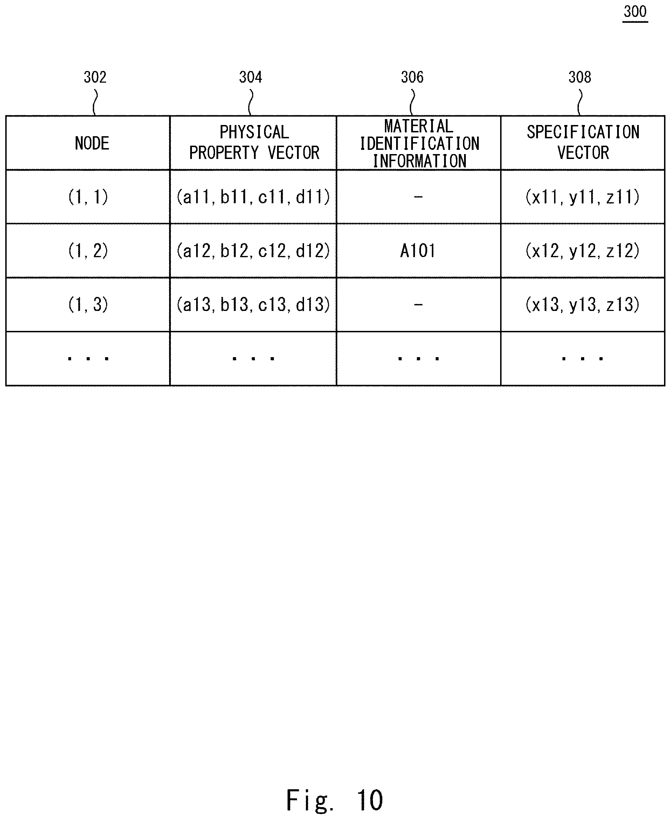

Fig. 10 is a diagram illustrating a structure of the self-organizing map 30 in which a specification vector is assigned to each node in a table format. The table 300 of Fig. 10 has four columns for node 302, physical property vector 304, material identification information 306, and specification vector 308. The table 300 has one record per node.

The node 302 indicates a coordinate of a node on the map space. The physical property vector 304 indicates the physical property vector assigned to a node. The material identification information 306 indicates, for a node to which material specification information 10 is assigned, the identification information of the material 60 indicated by the material specification information 10 assigned to the node. In a record of a node to which material specification information 10 is not assigned, the material identification information 306 indicates "-". The specification vector 308 indicates the specification vector assigned to the node.

<Output of Result>

The recommendation data generation apparatus 2000 outputs information (hereinafter, output information) indicating a processing result in any format. Hereinafter, the functional component of the recommendation data generation apparatus 2000 that outputs the output information will be referred to as an output unit. For example, the output information indicates, for each of the one or more target nodes, recommendation data 80 indicating material specifications corresponding to the target node in association with a coordinate of the target node.

For example, the output unit stores the output information in any storage device. In another example, the output unit outputs the output information to a display device, so that the display device displays the output information. In another example, the output unit transmits the output information to any other apparatus (e.g., the simulator described above).

Furthermore, the recommendation data generation apparatus 2000 may generate a map image visually showing the map space of the self-organizing map 30, the map image being included in the output information. The map image is an image that represents a relationship between a distribution of material specifications and a distribution of physical properties.

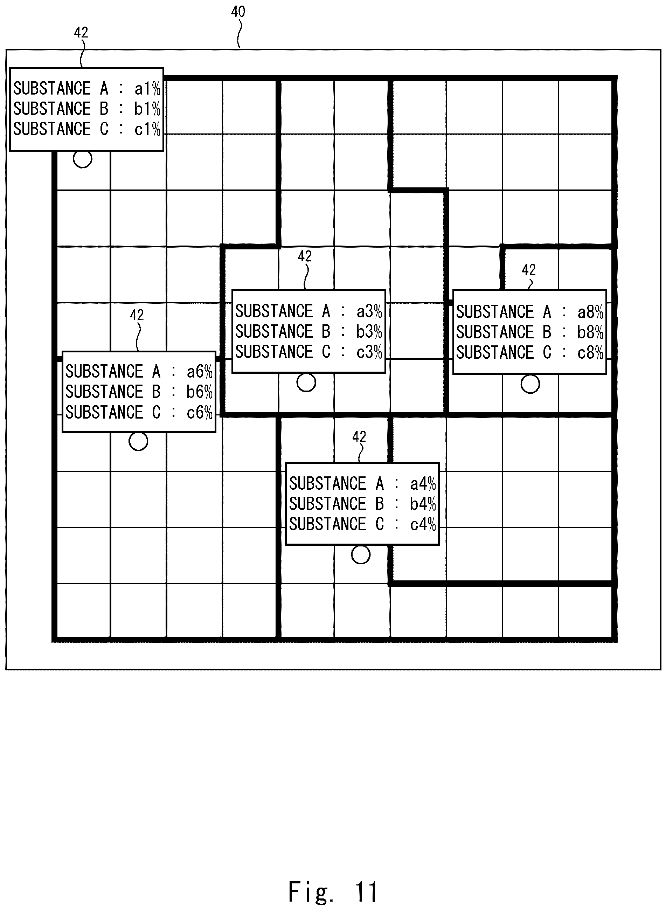

Fig. 11 is a diagram illustrating a map image. In Fig. 11, a map image 40 visually represents the map space of the self-organizing map 30. A material specification display 42 indicating a part of the entirety of the material specification information 10 is superimposed on a node to which that material specification information 10 is assigned.

Nodes in the map image 40 are divided into clusters based on the physical property vectors. A thick frame in the map image 40 represents a boundary between the cluster. In order to divide the nodes into clusters, the recommendation data generation apparatus 2000 performs clustering on the physical property vectors corresponding to the respective nodes of the self-organizing map 30. By dividing the physical property vectors into clusters as described above, it is also possible to divides nodes corresponding to the physical property vectors into clusters. For example, the recommendation data generation apparatus 2000 performs clustering on the physical property vectors by using various clustering algorithms such as the k-means method.

Each node in the map image 40 may be colored based on the physical property vector. Here, each node of the self-organizing map, any of well-known methods can be used as a method of performing coloring according to data associated with the node.

<Example of Method of Using Recommendation Data 80>

For example, the recommendation data 80 is used in a simulation of generating a product 70 and for experimentally generating a product 70. Here, the recommendation data 80 may be referred to by an operator who performs the simulation or experimental generation, or may be referred to by a simulator that performs the simulation. In the former case, the operator inputs the recommendation data 80 to the simulator to perform a simulation, or prepares a material 60 determined by the material specification indicated in the recommendation data 80 to experimentally generate a product 70. The latter case will be described as a second example embodiment as follows.

[Second Example Embodiment]

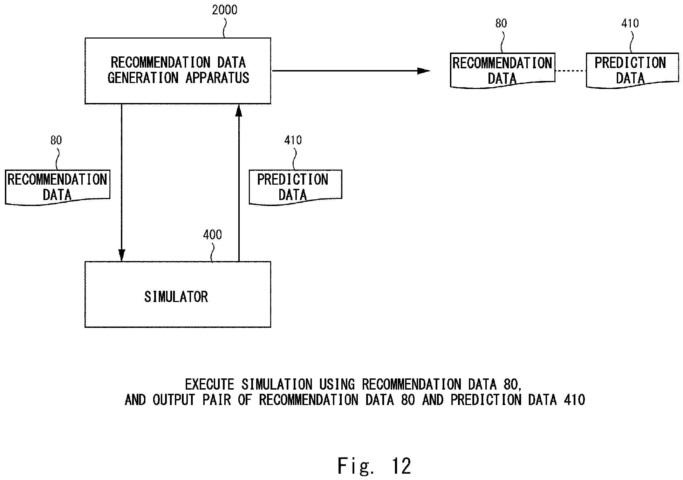

Fig. 12 is a diagram illustrating an overview of an operation of a recommendation data generation apparatus 2000 according to a second example embodiment. Here, Fig. 12 is a diagram for facilitating understanding of the overview of the recommendation data generation apparatus 2000, and the operation of the recommendation data generation apparatus 2000 is not limited to that illustrated in Fig. 12.

The recommendation data generation apparatus 2000 inputs the recommendation data 80 to a simulator 400 to cause the simulator 400 to execute a simulation. The simulator 400 simulates a production process as a target step. Specifically, the simulator 400 acquires input data indicating a material specification, and generates, for a product 70 generated using a material 60 determined by the input data, prediction data 410 that indicates predicted physical properties of the product 70. Here, as the simulator 400, any existing simulator that acquires input data indicating a material specification, performs a simulation using the input data, and outputs the prediction data of the physical properties of a product can be used. Furthermore, the simulator 400 may be implemented by a computer that implements the recommendation data generation apparatus 2000, or may be implemented by another computer.

The recommendation data generation apparatus 2000 acquires the prediction data 410 generated by the simulator 400, and outputs a pair of recommendation data 80 and prediction data 410. As a result, the pair of the recommendation data 80 and the prediction data 410 obtained by inputting the recommendation data 80 to the simulator 400 is output.

It can be said that this pair is equivalent to the above-described pair of the material specification information 10 and the physical property information 20. Therefore, by using the recommendation data generation apparatus 2000, it is possible to efficiently perform a simulation based on the result of the simulation of generating the product 70 or the experiment that has already been performed.

For example, for the first certain number of times, the material specifications for which simulation or experimental generation are to be performed are determined based on past knowledge or determined randomly. Thereafter, by inputting these results to the recommendation data generation apparatus 2000, the material specification that is predicted to be capable of producing a product having the physical properties whose similarity to the physical properties of each product 70 obtained by the simulation or the like that has already been performed is estimated, and is outputted as recommendation data 80. Then, by inputting the material specification indicated by the recommendation data 80 to the simulator 400, a new pair of the material specification and the physical properties is obtained.

By using the recommendation data generation apparatus 2000 as described above, it is possible to reduce the degree of similarity between the physical properties of the product 70 obtained in the new simulation and the physical properties of each product 70 obtained in the simulation or the like that has already been performed. This makes it possible to avoid a situation in which only products 70 having similar physical properties are obtained by simulations or the like, and to obtain a variety of physical properties of products 70 with fewer simulations.

The pair of recommendation data 80 and prediction data 410 is output in any manner. For example, the recommendation data generation apparatus 2000 stores the pair in any storage unit accessible from the recommendation data generation apparatus 2000. In another example, the recommendation data generation apparatus 2000 causes any display device that can be controlled from the recommendation data generation apparatus 2000 to display the pair. In another example, the recommendation data generation apparatus 2000 transmits the pair to any apparatus communicably connected to the recommendation data generation apparatus 2000.

Furthermore, the recommendation data generation apparatus 2000 may update the self-organizing map 30 by further training the self-organizing map 30 using the prediction data 410 as new training data. Furthermore, the recommendation data generation apparatus 2000 may generate a map image 40 for the updated self-organizing map 30, and output the map image in any manner.

Note that the recommendation data generation apparatus 2000 may cause the simulator 400 to execute a simulation using recommendation data 80 every time the recommendation data 80 is generated, or may generate a plurality of pieces of recommendation data 80 and then cause the simulator 400 to sequentially execute simulations for the plurality of pieces of recommendation data 80, respectively.

<Example of Functional Configuration>

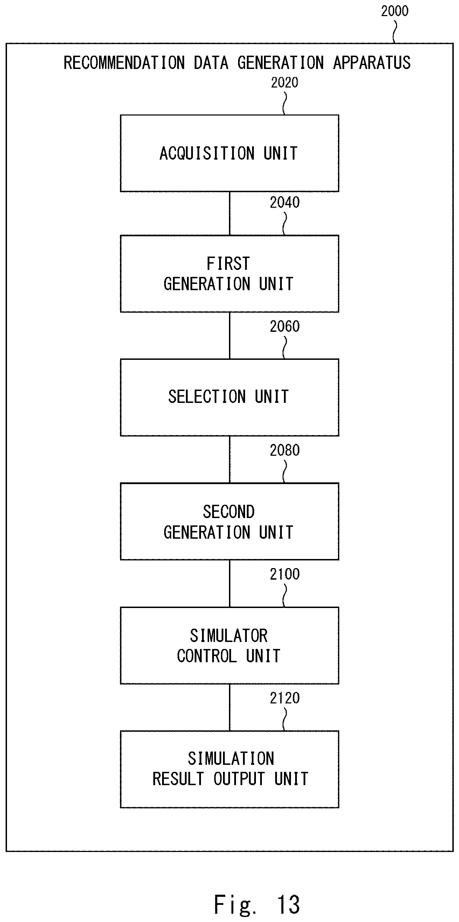

Fig. 13 is a block diagram illustrating a functional configuration of the recommendation data generation apparatus 2000 according to the second example embodiment. The recommendation data generation apparatus 2000 according to the second example embodiment further includes a simulator control unit 2120 and a simulation result output unit 2140. The simulator control unit 2120 causes the simulator 400 to execute a simulation of generating a product 70 using a material 60 that is specified by the material specification indicated by the recommendation data 80, by inputting the recommendation data 80 to the simulator 400. The simulation result output unit 2140 acquires prediction data 410 output from the simulator 400, and outputs a pair of recommendation data 80 and prediction data 410.

<Example of Hardware Configuration>

The hardware configuration of the recommendation data generation apparatus 2000 according to the second example embodiment is, for example, illustrated in Fig. 3, similarly to the recommendation data generation apparatus 2000 according to the first example embodiment. However, the storage device 1080 according to the second example embodiment stores a program for realizing each functional component of the recommendation data generation apparatus 2000 according to the second example embodiment.

<Flow of Processing>

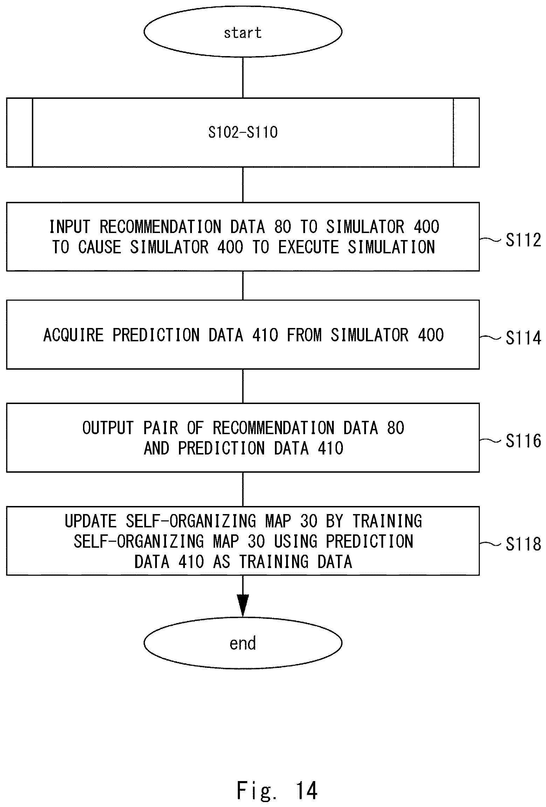

Fig. 14 is a flowchart illustrating a flow of processes executed by the recommendation data generation apparatus 2000 according to the second example embodiment. Here, S102 to S110 are the same as those illustrated in Fig. 4, and therefore are not illustrated in Fig. 14. In S112, the simulator control unit 2120 inputs the recommendation data 80 to the simulator 400 to cause the simulator 400 to execute a simulation. The simulation result output unit 2140 acquires prediction data 410 from the simulator 400 (S114). The simulation result output unit 2140 outputs a pair of recommendation data 80 and prediction data 410 (S116). The first generation unit 2040 updates the self-organizing map 30 by training the self-organizing map 30 using the prediction data 410 as training data (S118).

While the present disclosure has been particularly shown and described with reference to example embodiments thereof, the present disclosure is not limited to these example embodiments. It will be understood by those of ordinary skill in the art that various changes in form and details may be made therein without departing from the spirit and scope of the present disclosure as defined by the claims.

In the above-described example, the program includes instructions (or software codes) that, when loaded into a computer, cause the computer to perform one or more of the functions described in the embodiments. The program may be stored in a non-transitory computer readable medium or a tangible storage medium. By way of example, and not a limitation, non-transitory computer readable media or tangible storage media can include a random-access memory (RAM), a read-only memory (ROM), a flash memory, a solid-state drive (SSD) or other types of memory technologies, a CD-ROM, a digital versatile disc (DVD), a Blu-ray disc or other types of optical disc storage, and magnetic cassettes, magnetic tape, magnetic disk storage or other types of magnetic storage devices. The program may be transmitted on a transitory computer readable medium or a communication medium. By way of example, and not a limitation, transitory computer readable media or communication media can include electrical, optical, acoustical, or other forms of propagated signals.

Some or all of the above-described example embodiments can be described as, but not limited to, the following supplementary notes.

(Supplementary Note 1)

A recommendation data generation apparatus comprising:

an acquisition means for acquiring a plurality of pieces of material specification information indicating a material specification, and acquiring physical property information indicating a physical property value of each of a plurality of physical properties of a product that can be generated with the material specification indicated by the material specification information for each piece of the material specification information;
a first generation means for generating a self-organizing map in which a physical property vector indicating a value related to the physical property value of each of a plurality of types of physical properties of the product is assigned to each node on a map space by using the physical property information;
a selection means for selecting at least one target node from among nodes in the self-organizing map based on arrangement of the nodes corresponding to respective pieces of the physical property information in the map space; and
a second generation means for generating recommendation data indicating the material specification corresponding to the target node.

(Supplementary Note 2)

The recommendation data generation apparatus according to supplementary note 1,
wherein the selection means calculates, for each of a plurality of positions on the map space, an evaluation score based on distances between the position and the nodes corresponding to respective pieces of the physical property information, selects at least one of the plurality of positions based on the evaluation score, and selects a node corresponding to the selected position as the target node.

(Supplementary Note 3)

The recommendation data generation apparatus according to supplementary note 2,
wherein the evaluation score is a sum of reciprocals of the distances between the position and the nodes corresponding to respective pieces of the physical property information, or a reciprocal of a smallest value of the distances between the position and the nodes corresponding to respective pieces of the physical property information.

(Supplementary Note 4)

The recommendation data generation apparatus according to any one of supplementary notes 1 to 3, wherein the second generation means assigns a specification vector indicating a value related to material specification to each of the nodes by using each piece of the material specification information, and generates the recommendation data indicating the specification vector assigned to the target node.

(Supplementary Note 5)

The recommendation data generation apparatus according to any one of supplementary notes 1 to 3, further comprising:

a simulator control means for causing a simulator to execute a simulation with material specification indicated by the recommendation data as an input, the simulator being configured to generate prediction data of physical properties of the product that can be generated using a material specified by the input material specification; and
a simulation result output means for acquiring the prediction data generated by the simulator, and outputting the prediction data and the recommendation data.

(Supplementary Note 6)

A recommendation data generation method performed by a computer, the recommendation data generation method comprising:

an acquisition step of acquiring a plurality of pieces of material specification information indicating a material specification, and acquiring physical property information indicating a physical property value of each of a plurality of physical properties of a product that can be generated with the material specification indicated by the material specification information for each piece of the material specification information;
a first generation step of generating a self-organizing map in which a physical property vector indicating a value related to the physical property value of each of a plurality of types of physical properties of the product is assigned to each node on a map space by using the physical property information;
a selection step of selecting at least one target node from among nodes in the self-organizing map based on arrangement of the nodes corresponding to respective pieces of the physical property information in the map space; and
a second generation step of generating recommendation data indicating the material specifications corresponding to the target node.

(Supplementary Note 7)

The recommendation data generation method according to supplementary note 6, wherein in the selection step, calculating, for each of a plurality of positions on the map space, an evaluation score based on distances between the position and the nodes corresponding to respective pieces of the physical property information, selecting at least one of the plurality of positions based on the evaluation score, and selecting a node corresponding to the selected position as the target node.

(Supplementary Note 8)

The recommendation data generation method according to supplementary note 7, wherein the evaluation score is a sum of reciprocals of the distances between the position and the nodes corresponding to respective pieces of the physical property information, or a reciprocal of a smallest value of the distances between the position and the nodes corresponding to respective pieces of the physical property information.

(Supplementary Note 9)

The recommendation data generation method according to any one of supplementary notes 6 to 8, wherein in the second generation step, assigning a specification vector indicating a value related to material specification to each of the nodes by using each piece of the material specification information, and generating the recommendation data indicating the specification vector assigned to the target node.

(Supplementary Note 10)

The recommendation data generation method according to any one of supplementary notes 6 to 8, further comprising:

a simulator control step of causing a simulator to execute a simulation with a material specification indicated by the recommendation data as an input, the simulator being configured to generate prediction data of physical properties of the product that can be generated using a material specified by the input material specifications; and

a simulation result output step of acquiring the prediction data generated by the simulator, and outputting the prediction data and the recommendation data.

(Supplementary Note 11)

A non-transitory computer-readable medium storing a program for causing a computer to execute:

an acquisition step of acquiring a plurality of pieces of material specification information indicating a material specification, and acquiring physical property information indicating a physical property value of each of a plurality of physical properties of a product that can be generated with the material specification indicated by the material specification information for each piece of the material specification information;

a first generation step of generating a self-organizing map in which a physical property vector indicating a value related to the physical property value of each of a plurality of types of physical properties of the product is assigned to each node on a map space by using the physical property information;

a selection step of selecting at least one target node from among nodes in the self-organizing map based on arrangement of the nodes corresponding to respective pieces of the physical property information in the map space; and

a second generation step of generating recommendation data indicating the material specifications corresponding to the target node.

(Supplementary Note 12)

The computer-readable medium according to supplementary note 11,
wherein in the selection step, calculating, for each of a plurality of positions on the map space, an evaluation score based on distances between the position and the nodes corresponding to respective pieces of the physical property information, selecting at least one of the plurality of positions based on the evaluation score, and selecting a node corresponding to the selected position as the target node.

(Supplementary Note 13)

The computer-readable medium according to supplementary note 12,
wherein the evaluation score is a sum of reciprocals of the distances between the position and the nodes corresponding to respective pieces of the physical property information, or a reciprocal of a smallest value of the distances between the position and the nodes corresponding to respective pieces of the physical property information.

(Supplementary Note 14)

The computer-readable medium according to any one of supplementary notes 11 to 13,
wherein in the second generation step, assigning a specification vector indicating a value related to material specification to each of the nodes by using each piece of the material specification information, and generating the recommendation data indicating the specification vector assigned to the target node.

(Supplementary Note 15)

The computer-readable medium according to any one of supplementary notes 11 to 13, further comprising:

a simulator control step of causing a simulator to execute a simulation with a material specification indicated by the recommendation data as an input, the simulator being configured to generate prediction data of physical properties of the product that can be generated using a material specified by the input material specification; and

a simulation result output step of acquiring the prediction data generated by the simulator, and outputting the prediction data and the recommendation data.

**Reference Signs List**

| | |
|---|---|
| 10 | MATERIAL SPECIFICATION INFORMATION |
| 20 | PHYSICAL PROPERTY INFORMATION |
| 30 | SELF-ORGANIZING MAP |
| 32 | MAP SPACE |
| 34 | NODE |
| 36 | PARTIAL REGION |
| 40 | MAP IMAGE |
| 42 | MATERIAL SPECIFICATION DISPLAY |
| 60 | MATERIAL |
| 70 | PRODUCT |
| 80 | RECOMMENDATION DATA |
| 100 | TABLE |
| 102 | MATERIAL IDENTIFICATION INFORMATION |
| 104 | MATERIAL SPECIFICATIONS |
| 200 | TABLE |
| 202 | PRODUCT IDENTIFICATION INFORMATION |
| 204 | PHYSICAL PROPERTY |
| 300 | TABLE |
| 302 | NODE |
| 304 | PHYSICAL PROPERTY VECTOR |
| 306 | MATERIAL IDENTIFICATION INFORMATION |
| 308 | SPECIFICATION VECTOR |
| 400 | SIMULATOR |
| 410 | PREDICTION DATA |
| 1000 | COMPUTER |
| 1020 | BUS |
| 1040 | PROCESSOR |
| 1060 | MEMORY |
| 1080 | STORAGE DEVICE |
| 1100 | INPUT/OUTPUT INTERFACE |
| 1120 | NETWORK INTERFACE |
| 2000 | RECOMMENDATION DATA GENERATION APPARATUS |
| 2020 | ACQUISITION UNIT |
| 2040 | FIRST GENERATION UNIT |
| 2060 | SELECTION UNIT |
| 2080 | SECOND GENERATION UNIT |
| 2120 | SIMULATOR CONTROL UNIT |
| 2140 | SIMULATION RESULT OUTPUT UNIT |

**Claims**

1. A recommendation data generation apparatus comprising:

an acquisition means for acquiring a plurality of pieces of material specification information indicating a material specification, and acquiring physical property information indicating a physical property value of each of a plurality of physical properties of a product that can be generated with the material specification indicated by the material specification information for each piece of the material specification information;
a first generation means for generating a self-organizing map in which a physical property vector indicating a value related to the physical property value of each of a plurality of types of physical properties of the product is assigned to each node on a map space by using the physical property information;
a selection means for selecting at least one target node from among nodes in the self-organizing map based on arrangement of the nodes corresponding to respective pieces of the physical property information in the map space; and
a second generation means for generating recommendation data indicating the material specification corresponding to the target node.

2. The recommendation data generation apparatus according to claim 1,
wherein the selection means calculates, for each of a plurality of positions on the map space, an evaluation score based on distances between the position and the nodes corresponding to respective pieces of the physical property information, selects at least one of the plurality of positions based on the evaluation score, and selects a node corresponding to the selected position as the target node.

3. The recommendation data generation apparatus according to claim 2,
wherein the evaluation score is a sum of reciprocals of the distances between the position and the nodes corresponding to respective pieces of the physical property information, or a reciprocal of a smallest value of the distances between the position and the nodes corresponding to respective pieces of the physical property information.

4. The recommendation data generation apparatus according to any one of claims 1 to 3,
wherein the second generation means assigns a specification vector indicating a value related to material specification to each of the nodes by using each piece of the material specification information, and generates the recommendation data indicating the specification vector assigned to the target node.

5. The recommendation data generation apparatus according to any one of claims 1 to 3, further comprising:

a simulator control means for causing a simulator to execute a simulation with material specification indicated by the recommendation data as an input, the simulator being configured to generate prediction data of physical properties of the product that can be generated using a material specified by the input material specification; and
a simulation result output means for acquiring the prediction data generated by the simulator, and outputting the prediction data and the recommendation data.

6. A recommendation data generation method performed by a computer, the recommendation data generation method comprising:

an acquisition step of acquiring a plurality of pieces of material specification information indicating a material specification, and acquiring physical property information indicating a physical property value of each of a plurality of physical properties of a product that can be generated with the material specification indicated by the material specification information for each piece of the material specification information;
a first generation step of generating a self-organizing map in which a physical property vector indicating a value related to the physical property value of each of a plurality of types of physical properties of the product is assigned to each node on a map space by using the physical property information;
a selection step of selecting at least one target node from among nodes in the self-organizing map based on arrangement of the nodes corresponding to respective pieces of the physical property information in the map space; and
a second generation step of generating recommendation data indicating the material specifications corresponding to the target node.

7. The recommendation data generation method according to claim 6,
wherein in the selection step, calculating, for each of a plurality of positions on the map space, an evaluation score based on distances between the position and the nodes corresponding to respective pieces of the physical property information, selecting at least one of the plurality of positions based on the evaluation score, and selecting a node corresponding to the selected position as the target node.

8. The recommendation data generation method according to claim 7,
wherein the evaluation score is a sum of reciprocals of the distances between the position and the nodes corresponding to respective pieces of the physical property information, or a reciprocal of a smallest value of the distances between the position and the nodes corresponding to respective pieces of the physical property information.

9. The recommendation data generation method according to any one of claims 6 to 8,
wherein in the second generation step, assigning a specification vector indicating a value related to material specification to each of the nodes by using each piece of the material specification information, and generating the recommendation data indicating the specification vector assigned to the target node.

10. The recommendation data generation method according to any one of claims 6 to 8, further comprising:

a simulator control step of causing a simulator to execute a simulation with a material specification indicated by the recommendation data as an input, the simulator being configured to generate prediction data of physical properties of the product that can be generated using a material specified by the input material specifications; and
a simulation result output step of acquiring the prediction data generated by the simulator, and outputting the prediction data and the recommendation data.

11. A non-transitory computer-readable medium storing a program for causing a computer to execute:

an acquisition step of acquiring a plurality of pieces of material specification information indicating a material specification, and acquiring physical property information indicating a physical property value of each of a plurality of physical properties of a product that can be generated with the material specification indicated by the material specification information for each piece of the material specification information;
a first generation step of generating a self-organizing map in which a physical property vector indicating a value related to the physical property value of each of a plurality of types of physical properties of the product is assigned to each node on a map space by using the physical property information;
a selection step of selecting at least one target node from among nodes in the self-organizing map based on arrangement of the nodes corresponding to respective pieces of the physical property information in the map space; and
a second generation step of generating recommendation data indicating the material specifications corresponding to the target node.

12. The computer-readable medium according to claim 11,
wherein in the selection step, calculating, for each of a plurality of positions on the map space, an evaluation score based on distances between the position and the nodes corresponding to respective pieces of the physical property information, selecting at least one of the plurality of positions based on the evaluation score, and selecting a node corresponding to the selected position as the target node.

13. The computer-readable medium according to claim 12,
wherein the evaluation score is a sum of reciprocals of the distances between the position and the nodes corresponding to respective pieces of the physical property information, or a reciprocal of a smallest value of the distances between the position and the nodes corresponding to respective pieces of the physical property information.

14. The computer-readable medium according to any one of claims 11 to 13,
wherein in the second generation step, assigning a specification vector indicating a value related to material specification to each of the nodes by using each piece of the material specification information, and generating the recommendation data indicating the specification vector assigned to the target node.

15. The computer-readable medium according to any one of claims 11 to 13, further comprising:

a simulator control step of causing a simulator to execute a simulation with a material specification indicated by the recommendation data as an input, the simulator being configured to generate prediction data of physical properties of the product that can be generated using a material specified by the input material specification; and
a simulation result output step of acquiring the prediction data generated by the simulator, and outputting the prediction data and the recommendation data.

60

MATERIAL → PRODUCTION PROCESS OF TARGET STEP → PRODUCT  70

MATERIAL SPECIFICATION INFORMATION ～10

PHYSICAL PROPERTY INFORMATION  20～

10  MATERIAL SPECIFICATION INFORMATION --- PHYSICAL PROPERTY INFORMATION  20

2000

RECOMMENDATION DATA GENERATION APPARATUS

GENERATE SELF-ORGANIZING MAP 30 USING PHYSICAL PROPERTY VECTOR OBTAINED FROM PHYSICAL PROPERTY INFORMATION 20

SELF-ORGANIZING MAP ～30

DETERMINE CORRESPONDING NODE OF EACH PIECE OF PHYSICAL PROPERTY INFORMATION 20 FROM SELF-ORGANIZING MAP 30

SELECT TARGET NODE BASED ON ARRANGEMENT OF CORRESPONDING NODES IN MAP SPACE

GENERATE RECOMMENDATION DATA 80 INDICATING MATERIAL SPECIFICATION CORRESPONDING TO TARGET NODE

80 ～ RECOMMENDATION DATA

Fig. 1

2000

## RECOMMENDATION DATA GENERATION APPARATUS

2020

ACQUISITION UNIT

2040

FIRST GENERATION UNIT

2060

SELECTION UNIT

2080

SECOND GENERATION UNIT

Fig. 2

1000

COMPUTER

1060

MEMORY

1100

INPUT/OUTPUT
I/F

1020

BUS

PROCESSOR

STORAGE
DEVICE

NETWORK I/F

1040

1080

1120

Fig. 3

start

ACQUIRE MATERIAL SPECIFICATION
INFORMATION 10 AND PHYSICAL PROPERTY INFORMATION 20 — S102

GENERATE SELF-ORGANIZING MAP 30
USING PHYSICAL PROPERTY INFORMATION 20 — S104

DETERMINE CORRESPONDING NODE OF
EACH PIECE OF PHYSICAL PROPERTY INFORMATION 20 — S106

SELECT TARGET NODE BASED ON
ARRANGEMENT OF CORRESPONDING NODES IN MAP SPACE — S108

GENERATE RECOMMENDATION DATA 80 INDICATING
MATERIAL SPECIFICATION CORRESPONDING TO TARGET NODE — S110

end

Fig. 4

100

| MATERIAL IDENTIFICATION INFORMATION | MATERIAL SPECIFICATION |
|---|---|
| A101 | SUBSTANCE A: a1%, SUBSTANCE B: b1%, ··· |
| A102 | SUBSTANCE A: a2%, SUBSTANCE B: b2%, ··· |
| ··· | ··· |

102                    104

Fig. 5

200

| 202 | 204 |
|---|---|
| PRODUCT IDENTIFICATION INFORMATION | PHYSICAL PROPERTY INFORMATION |
| X101 | FLAME RETARDANCY: a1, HEAT RESISTANCE: b1, ELASTIC MODULUS: c1, TOUGHNESS: d1 |
| X102 | FLAME RETARDANCY: a2, HEAT RESISTANCE: b2, ELASTIC MODULUS: c2, TOUGHNESS: d2 |
| . . . | . . . |

Fig. 6

300

| NODE | PHYSICAL PROPERTY VECTOR |
|------|--------------------------|
| (1, 1) | (a11, b11, c11, d11) |
| (1, 2) | (a12, b12, c12, d12) |
| (1, 3) | (a13, b13, c13, d13) |
| . . . | . . . |

302     304

Fig. 7

start

DIVIDE MAP SPACE INTO PLURALITY OF PARTIAL REGIONS — S202

LOOP PROCESS L1
FOR EACH PARTIAL REGION R — S204

CALCULATE SCORE OF
REPRESENTATIVE POINT OF PARTIAL REGION R — S206

SCORE OF
REPRESENTATIVE POINT OF
PARTIAL REGION R < SCORE OF EACH
ADJACENT REPRESENTATIVE
POINT? — S208

NO

YES

STORE REPRESENTATIVE POINT OF
PARTIAL REGION R AS REFERENCE POINT IN LIST Lp — S210

LOOP PROCESS L1 — S212

1

Fig. 8A

① 1

LOOP PROCESS L2
UNTIL PREDETERMINED TERMINATION CONDITION IS SATISFIED — S214

LOOP PROCESS L3
FOR EACH REFERENCE POINT q INCLUDED IN Lp — S216

DIVIDE EVALUATION REGION WITH REFERENCE POINT q AS
ITS CENTER INTO PLURALITY OF PARTIAL REGIONS — S218

CALCULATE SCORE OF
REPRESENTATIVE POINT OF EACH PARTIAL REGION — S220

REPLACE REFERENCE POINT q IN Lp WITH
REPRESENTATIVE POINT HAVING SMALLEST SCORE — S222

LOOP PROCESS L3 — S224

LOOP PROCESS L2 — S226

SELECT NODE CORRESPONDING TO
EACH REFERENCE POINT IN Lp AS TARGET NODE — S228

end

Fig. 8B

Fig. 9

300

| 302 | 304 | 306 | 308 |
| --- | --- | --- | --- |
| NODE | PHYSICAL PROPERTY VECTOR | MATERIAL IDENTIFICATION INFORMATION | SPECIFICATION VECTOR |
| (1, 1) | (a11, b11, c11, d11) | – | (x11, y11, z11) |
| (1, 2) | (a12, b12, c12, d12) | A101 | (x12, y12, z12) |
| (1, 3) | (a13, b13, c13, d13) | – | (x13, y13, z13) |
| . . . | . . . | . . . | . . . |

Fig. 10

Fig. 11

EXECUTE SIMULATION USING RECOMMENDATION DATA 80,
AND OUTPUT PAIR OF RECOMMENDATION DATA 80 AND PREDICTION DATA 410

Fig. 12

2000

RECOMMENDATION DATA GENERATION APPARATUS

2020

ACQUISITION UNIT

2040

FIRST
GENERATION UNIT

2060

SELECTION UNIT

2080

SECOND
GENERATION UNIT

2100

SIMULATOR
CONTROL UNIT

2120

SIMULATION
RESULT OUTPUT UNIT

Fig. 13

start

S102–S110

INPUT RECOMMENDATION DATA 80 TO SIMULATOR 400
TO CAUSE SIMULATOR 400 TO EXECUTE SIMULATION — S112

ACQUIRE PREDICTION DATA 410 FROM SIMULATOR 400 — S114

OUTPUT PAIR OF RECOMMENDATION DATA 80
AND PREDICTION DATA 410 — S116

UPDATE SELF-ORGANIZING MAP 30 BY TRAINING
SELF-ORGANIZING MAP 30 USING PREDICTION
DATA 410 AS TRAINING DATA — S118

end

Fig. 14

| | INTERNATIONAL SEARCH REPORT | International application No. |
|---|---|---|
| | | **PCT/JP2022/017347** |

**A. CLASSIFICATION OF SUBJECT MATTER**

*G06F 30/27*(2020.01)i
FI: G06F30/27

According to International Patent Classification (IPC) or to both national classification and IPC

**B. FIELDS SEARCHED**

Minimum documentation searched (classification system followed by classification symbols)

G06F30/00-30/28; G16Z99/00; G06Q10/04; G06Q50/04; G16B5/00-99/00; G16C10/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-293315 A (YOKOHAMA RUBBER CO LTD) 04 December 2008 (2008-12-04) paragraphs [0019]-[0070] | 1, 4-6, 9-11, 14, 15 |
| A | | 2, 3, 7, 8, 12, 13 |
| Y | JP 2016-099737 A (YOKOHAMA RUBBER CO LTD) 30 May 2016 (2016-05-30) paragraphs [0048]-[0049] | 1, 4-6, 9-11, 14, 15 |
| A | | 2, 3, 7, 8, 12, 13 |
| A | JP 2007-087098 A (NISSAN MOTOR CO LTD) 05 April 2007 (2007-04-05) paragraphs [0010]-[0046] | 1-15 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 June 2022** | **28 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/017347**

| Patent document cited in search report | | | Publication date (day/month/year) | Patent family member(s) | | | Publication date (day/month/year) |
|---|---|---|---|---|---|---|---|
| JP | 2008-293315 | A | 04 December 2008 | (Family: none) | | | |
| JP | 2016-099737 | A | 30 May 2016 | US | 2017/0255721 | A1 | |
| | | | | paragraphs [0130]-[0133] | | | |
| | | | | WO | 2016/080394 | A1 | |
| | | | | EP | 3208752 | A1 | |
| JP | 2007-087098 | A | 05 April 2007 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016148988 A